# FASCICULE DE BREVET EUROPEEN

(11) **EP 2 739 840 B1**
(45) Date de publication et mention de la délivrance du brevet: **21.02.2018**
(21) Numéro de dépôt: 12743476.9
(22) Date de dépôt: 29.06.2012
(51) Int. Cl.: F02K 1/06, F02K 1/12, F02K 1/30, F02K 1/72

(54) **NACELLE DE TURBORÉACTEUR À TUYÈRE VARIABLE**
TRIEBWERKSGONDEL MIT VERSTELLBARER DÜSE
TURBOJET NACELLE WITH A VARIABLE NOZZLE

(30) Priorité: 05.08.2011 FR 1157174
(43) Date de publication de la demande: 11.06.2014
(73) Titulaire: Safran Nacelles, 76700 Gonfreville-l'Orcher (FR)
(72) Inventeur: CARUEL, Pierre, F-76600 Le Havre (FR); GONIDEC, Patrick, F-31530 Bretx (FR); BOILEAU, Patrick, F-31170 Tournefeuille (FR)
(74) Mandataire: Chevalier, Renaud Philippe
(86) Numéro de dépôt international: PCT/FR2012/051501
(87) Numéro de publication internationale: WO 2013/021108

(56) Documents cités:
- FR-A1- 2 934 326
- US-A- 3 779 010
- US-A1- 2003 126 856
- US-A1- 2005 126 174

## Description

La présente invention concerne une nacelle de turboréacteur équipée d'un dispositif d'inversion de poussée prolongé d'une tuyère variable.

Une nacelle présente généralement une structure tubulaire comprenant une entrée d'air en amont du turboréacteur, une section médiane destinée à entourer une soufflante du turboréacteur, une section aval abritant un dispositif d'inversion de poussée et destiné à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des aubes de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un dispositif d'inversion de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un dispositif d'inversion de poussée comprend des éléments mobiles déplaçables entre, d'une part, une position déployée dans laquelle ils ouvrent dans la nacelle un passage destiné au flux dévié, et d'autre part, une position d'escamotage dans laquelle ils ferment ce passage.

Ces éléments mobiles peuvent remplir une fonction de déviation ou simplement d'activation d'autres moyens de déviation.

Dans le cas d'un inverseur à grilles de déviation, le dispositif d'inversion de poussée comporte des grilles de déviation ayant pour fonction la réorientation du flux d'air, associées à des volets d'inversion et des capots mobiles en translation selon une direction sensiblement parallèle à un axe longitudinal de la nacelle.

Les capots mobiles ont une fonction de coulissage visant à découvrir ou recouvrir ces grilles de déviation. Les volets d'inversion, quant à eux, forment des portes de blocage pouvant être activées par le coulissement du capot engendrant une fermeture de la veine en aval des grilles, de manière à optimiser la réorientation du flux d'air froid.

Par ailleurs, outre sa fonction d'inversion de poussée, le capot coulissant appartient à la section arrière et présente un côté aval formant la tuyère d'éjection visant à canaliser l'éjection des flux d'air.

Cette tuyère fournit la puissance nécessaire pour la propulsion en imprimant une vitesse aux flux d'éjection et module la poussée en faisant varier sa section de sortie en réponse à des variations du réglage de la puissance du moteur et des conditions de vol.

Il est connu, notamment du document WO 2009/029401, de prévoir, sur la section de tuyère située juste à l'arrière d'un capot mobile, un volet de tuyère monté mobile entre une position fermée et au moins une position ouverte dans laquelle ledit volet de tuyère ouvre un passage de fuite vers l'extérieur de la tuyère. Dans ce document, les passages de fuite dans la tuyère sont obtenus en translatant les volets de tuyère au moyen de vérins spécifiques dédiés au déplacement des volets et distincts des vérins employés pour déplacer les capots mobiles et donc permettre le déploiement du dispositif d'inversion de poussée.

L'intérêt d'employer des volets mobiles est de pouvoir adapter la section optimale de la tuyère d'éjection en fonction des différentes phases de vol, à savoir les phases de décollage, de croisière et d'atterrissage de l'avion.

L'inconvénient principal de ce type de nacelle tient de l'emploi de vérins d'actionnement des capots mobiles et de vérins supplémentaires d'actionnement des volets de tuyère, la présence de ces vérins supplémentaires entraînant un surcroît de poids pour la nacelle et également un surcroît de complexité pour implanter de tels vérins dans un environnement encombré et étroit.

L'état de la technique peut également être illustré par l'enseignement des documents US 3 779 010 et US 2003/126856 qui divulguent chacun une nacelle de turboréacteur comportant un dispositif d'inversion de poussée avec un capot mobile piloté en translation au moyen d'un actionneur, et avec un volet d'inversion.

Un but de la présente invention est de pallier les problèmes définis ci-dessus.

Ainsi, un but de la présente invention est de proposer une nacelle de turboréacteur équipée d'un dispositif d'inversion de poussée prolongé d'une tuyère variable qui présente une structure adaptée pour réaliser un contrôle de la variation de la section de tuyère, simplifiée et efficace pour les manoeuvres d'actionnement de la tuyère et du dispositif d'inversion.

Il est également désirable d'offrir une nacelle permettant un contrôle fiable de la variation de la section de tuyère, dans un environnement encombré et étroit.

A cet effet, la présente invention se rapporte à une nacelle de turboréacteur comprenant :
- un dispositif d'inversion de poussée et un système d'actionnement dudit dispositif d'inversion de poussée, ledit dispositif comprenant au moins un capot mobile monté en translation selon une direction sensiblement parallèle à un axe longitudinal de la nacelle apte à passer alternativement d'une position de fermeture dans laquelle il assure la continuité aérodynamique de la nacelle à une position d'ouverture dans laquelle il ouvre un passage dans la nacelle destiné à un flux dévié ; et
- au moins une section de tuyère d'éjection des gaz prolongeant ledit capot mobile et comportant au moins un volet de tuyère monté mobile entre une position fermée et au moins une position ouverte dans laquelle ledit volet de tuyère ouvre un passage de fuite vers l'extérieur de la tuyère ;
ladite nacelle étant remarquable en ce que ledit volet de tuyère est monté pivotant sur le capot mobile et le système d'actionnement comprend des moyens d'actionnement communs au capot mobile et au volet de tuyère et aptes à activer le déplacement en translation du capot mobile et le pivotement du volet de tuyère entre les trois positions suivantes :
- une première position dite de repos dans laquelle le capot mobile est dans sa position de fermeture et le volet de tuyère est dans sa position fermée ;
- une deuxième position dite d'ouverture du volet de tuyère dans laquelle le capot mobile est dans sa position de fermeture et le volet de tuyère est dans sa position ouverte ; et
- une troisième position dite d'ouverture du capot mobile dans laquelle le capot mobile est dans sa position d'ouverture et le volet de tuyère est dans sa position fermée.

De cette manière, l'invention propose d'articuler à rotation le volet de tuyère sur le capot mobile, fiabilisant ainsi le contrôle de l'adaptation de section de tuyère par rapport à un volet translatant, et d'employer des moyens d'actionnement communs au capot mobile et au volet de tuyère, ce qui permet de réaliser à la fois la variation de section (deuxième position avec une commande du volet de tuyère) et le déploiement du dispositif d'inversion (troisième position avec une commande du capot mobile) avec les mêmes moyens d'actionnement.

Ainsi, l'invention permet un gain en poids pour la nacelle et limite l'encombrement avec des moyens d'actionnement conjoints pour le capot mobile et le volet de tuyère qui permettent d'avoir une seule ligne de commande au lieu de deux lignes de commande pour l'état de la technique.

En outre, un volet de tuyère pivotant présente avantageusement moins de risque de coincement qu'un volet translatant.

Selon une caractéristique, les moyens d'actionnement sont adaptés pour activer le déplacement en translation du capot mobile de sa position d'ouverture vers sa position de fermeture, et pour ensuite activer le pivotement du volet de tuyère de sa position fermée vers sa position ouverte tout en maintenant le capot mobile dans sa position de fermeture.

De cette manière, l'ouverture du volet de tuyère ne s'effectue qu'une fois que le capot mobile est fermé, pour pouvoir augmenter la section de sortie de la tuyère lors des phases de jet direct.

Selon une autre caractéristique, les moyens d'actionnement sont adaptés pour activer le pivotement du volet de tuyère de sa position ouverte vers sa position fermée, et pour ensuite activer le déplacement en translation du capot mobile de sa position de fermeture vers sa position d'ouverture tout en maintenant le volet de tuyère dans sa position fermée.

De cette manière, l'ouverture du capot mobile ne s'effectue qu'une fois que le volet de tuyère est fermé, pour pouvoir réaliser l'inversion de poussée sans interférence du volet de tuyère.

Dans une réalisation particulière, le dispositif d'inversion de poussée comporte une structure fixe avant, telle qu'une structure de cadre avant, supportant au moins un moyen de déviation de flux logé à l'intérieur du capot mobile dans sa position d'ouverture, les moyens d'actionnement étant montés sur ladite structure fixe avant.

Ainsi, les moyens d'actionnement sont montés fixement sur la structure fixe avant pour obtenir une architecture stable permettant de répondre aux nombreuses contraintes mécaniques observées dans une nacelle.

Avantageusement, la nacelle comprend des moyens de verrouillage du capot mobile dans sa position de fermeture sur la structure fixe avant, pour pouvoir verrouiller le dispositif d'inversion en position de jet direct tout en permettant d'ouvrir et fermer le ou les volets de tuyère pivotants.

Dans un mode de réalisation particulier, le volet de tuyère est monté pivotant sur une paroi interne du capot mobile.

Cette réalisation est avantageuse pour des raisons à la fois aérodynamiques et de contrôle de l'articulation du volet de tuyère pivotant.

Selon une possibilité de l'invention, le volet de tuyère bascule de sa position fermée vers sa position ouverte par pivotement vers l'extérieur de la tuyère.

Selon une autre possibilité de l'invention, les moyens d'actionnement comprennent un actionneur linéaire pourvu d'un corps creux à l'intérieur duquel est logée une tige mobile en translation, ladite tige mobile traversant le capot mobile et présentant une extrémité libre fixée sur le volet de tuyère.

Ainsi, les moyens d'actionnement permettent de réaliser à la fois la variation de section (commande du volet de tuyère) et le déploiement du dispositif d'inversion (commande du capot mobile) avec une même tige mobile en translation.

Conformément à une autres caractéristique avantageuse de l'invention, la tige de l'actionneur linéaire est mobile entre :
- la première position dite de repos dans laquelle la tige commande le capot mobile dans sa position de fermeture et le volet de tuyère dans sa position fermée ;
- la deuxième position dite d'ouverture du volet de tuyère dans laquelle la tige est rétractée à l'intérieur du corps creux par rapport à la première position, ladite tige maintenant le capot mobile dans sa position de fermeture et commandant le pivotement du volet de tuyère vers sa position ouverte en passant de la première à la deuxième position ; et
- la troisième position dite d'ouverture du capot mobile dans laquelle la tige est déployée hors du corps creux par rapport à la première position, ladite tige commandant le déplacement en translation du capot mobile vers sa position d'ouverture et maintenant le volet de tuyère dans sa position fermée en passant de la première à la troisième position.

Ainsi, à partir de la première position de repos, les moyens d'actionnement permettent de réaliser la variation de section (commande du volet de tuyère par rétractation de la tige pendant que le capot reste fermé) et aussi de réaliser le déploiement du dispositif d'inversion (commande du capot mobile par déploiement ou sortie de la tige pendant que le volet de tuyère reste fermé et est entraîné en déplacement vers l'aval de façon mutuel avec le capot).

Selon une caractéristique, le corps creux est fixé sur la structure fixe avant.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une représentation schématique partielle et en coupe longitudinale d'une nacelle conforme à l'invention dans une première position avec le capot mobile et le volet de tuyère fermés, sur laquelle sont illustrés les moyens d'actionnement du capot et du volet de tuyère ;
- la figure 2 est une représentation schématique partielle et en coupe longitudinale de la nacelle de la figure 1 dans la première position, sur laquelle est illustrée la grille de déviation ;
- la figure 3 est une représentation schématique partielle et en coupe longitudinale de la nacelle de la figure 1 dans une deuxième position avec le capot mobile fermé et le volet de tuyère ouvert, sur laquelle sont illustrés les moyens d'actionnement du capot et du volet de tuyère ;
- la figure 4 est une représentation schématique partielle et en coupe longitudinale de la nacelle de la figure 3 dans la deuxième position, sur laquelle est illustrée la grille de déviation ;
- la figure 5 est une représentation schématique partielle et en coupe longitudinale de la nacelle de la figure 1 dans une troisième position avec le capot mobile ouvert et le volet de tuyère fermé, sur laquelle sont illustrés les moyens d'actionnement du capot et du volet de tuyère ;
- la figure 6 est une représentation schématique partielle et en coupe longitudinale de la nacelle de la figure 5 dans la troisième position, sur laquelle est illustrée la grille de déviation.

De façon générale, une nacelle est destinée à constituer un logement tubulaire pour un turboréacteur double flux et sert à canaliser les flux d'air qu'il génère par l'intermédiaire de aubes d'une soufflante, à savoir un flux d'air chaud (dit flux principal) traversant une chambre de combustion et un flux d'air froid (dit flux secondaire) circulant à l'extérieur du turboréacteur.

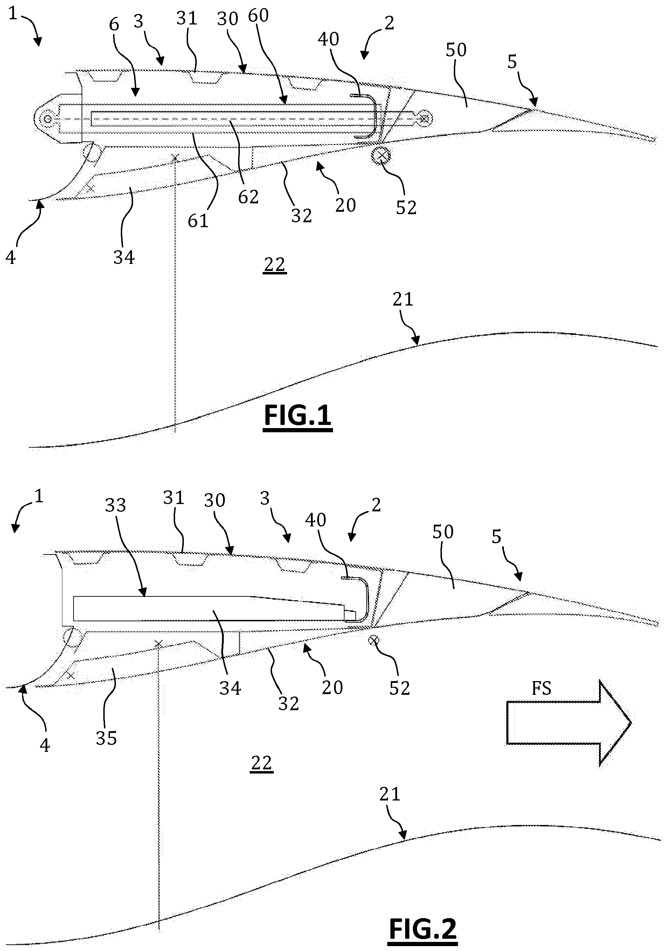

Cette nacelle comprend une section amont formant une entrée d'air, une section médiane 1 entourant la soufflante du turboréacteur et une section aval 2 prolongeant la section médiane 1 et entourant le turboréacteur. On a représenté, sur les figures 1 à 6, une partie de la section médiane 1 et une partie de la section aval 2.

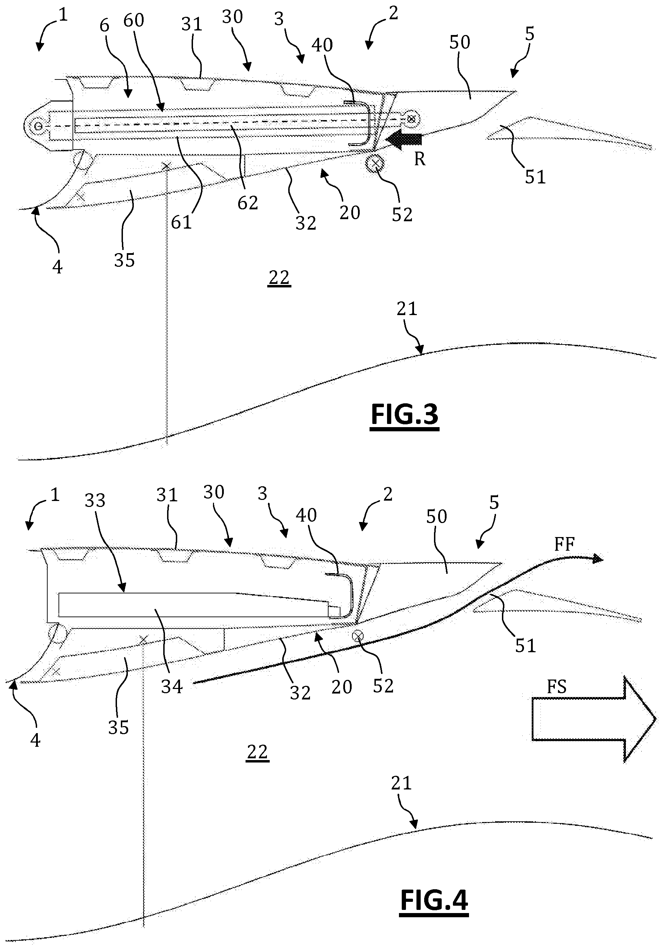

La section aval 2 comprend une structure externe 20 et une structure interne 21 de carénage de moteur définissant avec la structure externe 20 une veine 22 destinée à la circulation du flux d'air froid ou flux secondaire, illustré par la flèche FS sur les figures 2 et 4, dans le cas de la nacelle de turboréacteur double flux telle que présentée ici.

La structure externe 20 comprend un dispositif d'inversion de poussée 3 intégrant :
- un capot mobile 30 comprenant une virole ou paroi externe 31 et une virole ou paroi interne 32 ; et
- des moyens de déviation 33 du flux composé d'un assemblage de grilles de déviation 34.

La structure externe 20 comprend en outre :
- une structure fixe avant 4 constituée d'une structure de cadre avant ; et
- une section de tuyère d'éjection 5.

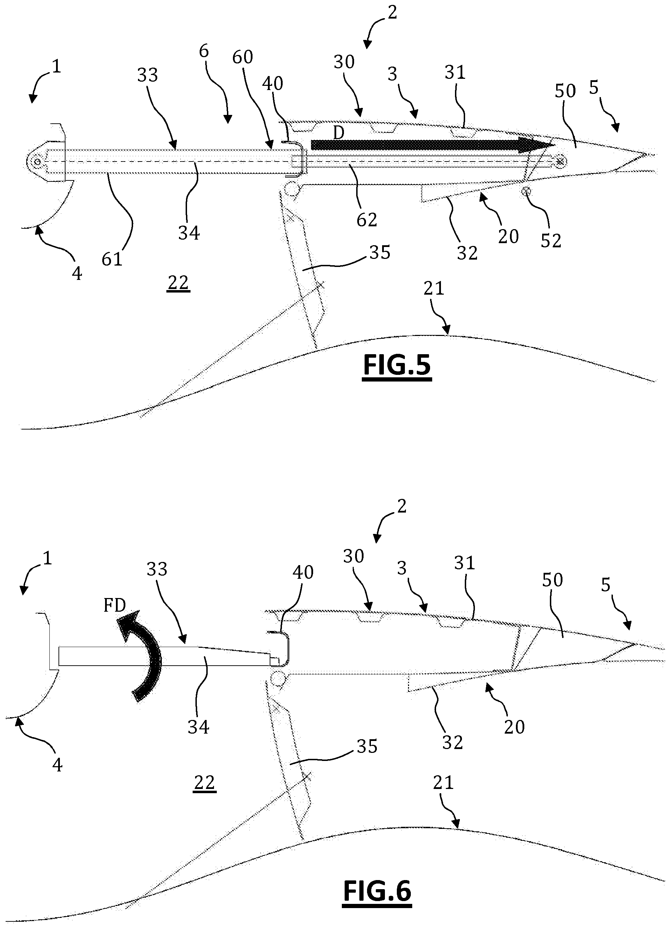

Le capot 30 est destiné à être actionné selon une direction sensiblement longitudinale de la nacelle entre deux positions extrêmes :
- une position de fermeture (illustrée sur les figures 1 à 4, dite position de jet direct) dans laquelle la virole interne 32 vient au contact du cadre avant 4 et la virole externe 31 vient en contact de la section médiane 1 et assure la continuité aérodynamique des lignes externes de la section aval 2 pour la circulation du flux secondaire FS dans la veine 22 ; et
- une position d'ouverture (illustrée sur les figures 5 et 6, dite position de jet inverse) dans laquelle il ouvre un passage dans la nacelle et découvre les moyens de déviation 33.

Le capot 30 permet au flux secondaire FS du turboréacteur de s'échapper au moins partiellement, cette portion de flux appelée flux dévié, illustrée par la flèche FD sur la figure 6, étant réorientée vers l'avant de la nacelle par les grilles de déviation 34, générant de ce fait une contre-poussée apte à aider au freinage de l'aéronef. Le guidage du capot mobile 30 par rapport à une structure fixe se fait par un système de rail/coulisseau (non visible sur la figure) connu de l'homme de métier.

Les grilles de déviation 34 sont supportées en amont par la structure de cadre avant 4 et sont logés à l'intérieur du capot mobile 30 dans sa position d'ouverture. Les grilles de déviation 34 peuvent également être supportées en aval par une structure de cadre arrière 40. Dans une variante non illustrée, les grilles de déviation 34 sont du type autosupporté et sont ainsi supportées uniquement par la structure de cadre avant 4 sans être supportées par une structure de cadre arrière.

Afin d'augmenter le flux dévié FD (correspondant pour rappel à la portion de flux secondaire traversant les grilles 34) et donc la contre-poussée, la virole interne 32 du capot 30 comprend une pluralité de volets d'inversion 35, répartis sur sa circonférence et montés chacun pivotant par une extrémité autour d'un axe d'articulation, entre deux positions extrêmes :
- une position rétractée (illustrée sur les figures 1 à 4) concordant avec la position de fermeture du capot 30, dans laquelle le volet d'inversion 35 est rabattue contre le capot 30 pour fermer une ouverture d'accès aux grilles de déviation 34 et pour assurer la continuité aérodynamique intérieure de la veine 22 ; et
- une position déployée (illustrée sur les figures 5 et 6) concordant avec la position d'ouverture du capot 30 (situation d'inversion de poussée ou jet inverse) dans laquelle le volet d'inversion 35 obture au moins partiellement la veine 22 en vue de dévier le flux secondaire FS vers les grilles de déviation 34.

Par ailleurs, la section de tuyère d'éjection 5 dans le prolongement aval du capot mobile 30 comprend une série de volets de tuyère 50 montés en rotation à une extrémité aval du capot mobile 30 et répartis sur la périphérie de la section de tuyère d'éjection 5.

Chaque volet de tuyère 50 est monté mobile en rotation entre deux positions extrêmes :
- une position fermée (illustrée sur les figures 1, 2, 5 et 6) dans laquelle le volet de tuyère 50 est rabattu contre la section de tuyère 5 pour fermer un passage de fuite 51 vers l'extérieur de la tuyère 5 et pour assurer la continuité aérodynamique intérieure de la veine 22 ; et
- une position ouverte (illustrée sur les figures 3 et 4) dans laquelle le volet de tuyère 50 ouvre le passage de fuite 51 vers l'extérieur de la tuyère 5, mettant ainsi en communication la veine 22 avec l'extérieur pour établir un écoulement de fuite illustré par la flèche FF sur la figure 4 et ainsi augmenter la section de la tuyère 5.

Chaque volet de tuyère 50 est porté par le capot mobile 30 par l'intermédiaire d'une articulation pivot 52 entre la virole interne 32 du capot mobile 30 et le volet de tuyère 50 selon un axe perpendiculaire à l'axe longitudinal de la nacelle. Ainsi, chaque volet de tuyère 50 est monté pivotant sur la virole interne 32 du capot mobile 30.

En outre, chaque volet de tuyère 50 bascule de sa position fermée vers sa position ouverte par pivotement vers l'extérieur de la tuyère 5. Autrement dit, chaque volet de tuyère 50 fait saillie extérieurement de la tuyère lorsqu'il occupe sa position ouverte.

Par ailleurs, la nacelle comporte des moyens d'actionnement 6 aptes à activer le déplacement en translation du capot 30 et le pivotement du volet de tuyère 50 ; ces moyens d'actionnement 6 étant communs au capot 30 et au volet de tuyère 50 disposé dans le prolongement du capot 30.

Ces moyens d'actionnement 6 comprennent au moins un actionneur 60 linéaire simple action électrique, hydraulique ou pneumatique. Cet actionneur 60 peut être placé entre deux lignes longitudinales d'attache des grilles de déviation 34.

L'actionneur 60 est apte à permettre le déplacement du capot 30 en amont ou en aval de la nacelle et assurer le pivotement des panneaux 50 de la tuyère 5 lors des phases de variation de section de tuyère 5. Cet actionneur 60 assure ainsi, avantageusement, deux fonctions, à savoir la gestion du pivotement du volet de tuyère 50 et la gestion de l'inversion de poussée en pilotant le capot mobile 30.

Plus précisément, l'actionneur 60 comprend un corps creux 61 à l'intérieur duquel est logée une tige 62 mobile en translation. Le corps creux 61 est rattaché à son extrémité amont à la structure de cadre avant 4, tandis que la tige 62 est reliée, à son extrémité aval libre, au volet de tuyère 50 ; ladite tige 62 traversant ainsi l'extrémité amont du capot mobile 30, et éventuellement la structure de cadre arrière 40, pour venir se fixer sur le volet de tuyère 50.

A titre d'alternative, on peut également considérer la solution opposée suivante : une tige filetée fixe en translation et tournant, et un tube creux relié d'une part aux volets et d'autre part à la tige filetée par l'intermédiaire d'un écrou
Pour la gestion du pivotement du volet de tuyère 50 et du déplacement en translation du capot mobile 30, la tige 62 de l'actionneur 60 est mobile entre :
- une première position dite de repos (illustrée sur les figures 1 et 2) dans laquelle la tige 62 commande le capot mobile 30 dans sa position de fermeture et le volet de tuyère 50 dans sa position fermée ;
- une deuxième position dite d'ouverture du volet de tuyère 50 (illustrée sur les figures 3 et 4) dans laquelle la tige 62 est rétractée à l'intérieur du corps creux 61 par rapport à la première position, ladite tige 62 maintenant le capot mobile 30 dans sa position de fermeture et commandant le pivotement du volet de tuyère 50 vers sa position ouverte en passant de la première à la deuxième position ; et
- une troisième position dite d'ouverture du capot mobile 30 (illustrée sur les figures 5 et 6) dans laquelle la tige 62 est déployée hors du corps creux 61 par rapport à la première position, ladite tige 62 commandant le déplacement en translation du capot mobile 30 vers sa position d'ouverture tout en maintenant le volet de tuyère 50 dans sa position fermée en passant de la première à la troisième position.

Ainsi, en partant de la première position de repos, il suffit de :
- rétracter la tige 62 (comme schématisé par la flèche R sur la figure 3) pour ouvrir le volet de tuyère 50, qui pivote vers l'extérieur autour de son articulation pivot 52, sans influencer sur le capot mobile 30 qui reste fermé ;
- déployer la tige 62 (comme schématisé par la flèche D sur la figure 5) pour ouvrir le capot mobile 30, qui translate vers l'aval, sans influencer sur le volet de tuyère 50 qui reste fermé.

De manière avantageuse, la nacelle comporte des moyens de verrouillage (non illustrés) du capot mobile 30 dans sa position de fermeture sur la structure fixe avant 4, de sorte que ces moyens de verrouillage sont activés dans les première et deuxième positions précités de la tige 62, et sont désactivés lorsque la tige 62 passe de la première à la troisième position.

Bien entendu l'exemple de mise en oeuvre évoqué ci-dessus ne présente aucun caractère limitatif et d'autres améliorations et détails peuvent être apportés à la nacelle selon l'invention, sans pour autant sortir du cadre de l'invention où d'autres formes de moyens de déviation peuvent par exemple être réalisées.

## Revendications

1. Nacelle de turboréacteur comprenant :
- un dispositif d'inversion de poussée (3) et un système d'actionnement dudit dispositif d'inversion de poussée (3), ledit dispositif comprenant au moins un capot mobile (30) monté en translation selon une direction sensiblement parallèle à un axe longitudinal de la nacelle entre alternativement une position de fermeture dans laquelle il assure la continuité aérodynamique de la nacelle et une position d'ouverture dans laquelle il ouvre un passage dans la nacelle destiné à un flux dévié (FD) dirigé vers l'avant de la nacelle pour générer une inversion de poussée ; et
- au moins une section de tuyère (5) d'éjection des gaz prolongeant ledit capot mobile (30) et comportant au moins un volet de tuyère (50) monté mobile entre une position fermée dans laquelle le volet de tuyère (50) est rabattu contre la section de tuyère (5) pour fermer un passage de fuite (51) vers l'extérieur de la section de tuyère (5) et au moins une position ouverte dans laquelle ledit volet de tuyère (50) fait saillie extérieurement de la section de tuyère (5) et ouvre le passage de fuite (51) vers l'extérieur de la tuyère ;
ladite nacelle étant **caractérisée en ce que** ledit volet de tuyère (50) est monté pivotant sur le capot mobile (30) et le système d'actionnement comprend des moyens d'actionnement (6) communs au capot mobile (30) et au volet de tuyère (50), lesdits moyens d'actionnement (6) étant conformés pour activer le déplacement en translation du capot mobile (30) et le pivotement du volet de tuyère (50) entre les trois positions suivantes :
- une première position dite de repos dans laquelle le capot mobile (30) est dans sa position de fermeture et le volet de tuyère (50) est dans sa position fermée ;
- une deuxième position dite d'ouverture du volet de tuyère (50) dans laquelle le capot mobile (30) est dans sa position de fermeture et le volet de tuyère (50) est dans sa position ouverte ; et
- une troisième position dite d'ouverture du capot mobile (30) dans laquelle le capot mobile (30) est dans sa position d'ouverture et le volet de tuyère (50) est dans sa position fermée.

2. Nacelle selon la revendication 1, dans laquelle les moyens d'actionnement (6) sont adaptés pour activer le déplacement en translation du capot mobile (30) de sa position d'ouverture vers sa position de fermeture, et pour ensuite activer le pivotement du volet de tuyère (50) de sa position fermée vers sa position ouverte tout en maintenant le capot mobile (30) dans sa position de fermeture.

3. Nacelle selon les revendications 1 ou 2, dans laquelle les moyens d'actionnement (6) sont adaptés pour activer le pivotement du volet de tuyère (50) de sa position ouverte vers sa position fermée, et pour ensuite activer le déplacement en translation du capot mobile (30) de sa position de fermeture vers sa position d'ouverture tout en maintenant le volet de tuyère (50) dans sa position fermée.

4. Nacelle selon l'une quelconque des revendications précédentes, dans laquelle le dispositif d'inversion de poussée (3) comporte une structure fixe avant (4), telle qu'une structure de cadre avant, supportant au moins un moyen de déviation (33) de flux logé à l'intérieur du capot mobile (30) dans sa position d'ouverture, les moyens d'actionnement (6) étant montés sur ladite structure fixe avant (4).

5. Nacelle selon la revendication 4, comprenant en outre des moyens de verrouillage du capot mobile (30) dans sa position de fermeture sur la structure fixe avant (4).

6. Nacelle selon l'une quelconque des revendications précédentes, dans laquelle le volet de tuyère (50) est monté pivotant sur une paroi interne (32) du capot mobile (30).

7. Nacelle selon l'une quelconque des revendications précédentes, dans laquelle le volet de tuyère (50) bascule de sa position fermée vers sa position ouverte par pivotement vers l'extérieur de la tuyère.

8. Nacelle selon l'une quelconque des revendications précédentes, dans laquelle les moyens d'actionnement (6) comprennent un actionneur (60) linéaire pourvu d'un corps creux (61) à l'intérieur duquel est logée une tige (62) mobile en translation, ladite tige (62) mobile traversant le capot mobile (30) et présentant une extrémité libre fixée sur le volet de tuyère (50).

9. Nacelle selon la revendication 8, dans laquelle la tige (62) de l'actionneur (60) linéaire est mobile entre :
- la première position dite de repos dans laquelle la tige (62) commande le capot mobile (30) dans sa position de fermeture et le volet de tuyère (50) dans sa position fermée ;
- la deuxième position dite d'ouverture du volet de tuyère (50) dans laquelle la tige (62) est rétractée à l'intérieur du corps creux (61) par rapport à la première position, ladite tige (62) maintenant le capot mobile (30) dans sa position de fermeture et commandant le pivotement du volet de tuyère (50) vers sa position ouverte en passant de la première à la deuxième position ; et
- la troisième position dite d'ouverture du capot mobile (30) dans laquelle la tige (62) est déployée hors du corps creux (61) par rapport à la première position, ladite tige (62) commandant le déplacement en translation du capot mobile (30) vers sa position d'ouverture et maintenant le volet de tuyère (50) dans sa position fermée en passant de la première à la troisième position.

10. Nacelle selon la revendication 4 en combinaison avec les revendications 8 ou 9, dans lequel le corps creux (61) est fixé sur la structure fixe avant (4).

## Patentansprüche

1. Turbotriebwerksgondel, umfassend:
- eine Schubumkehrvorrichtung (3) und ein System zur Betätigung der besagten Schubumkehrvorrichtung (3), wobei die besagte Vorrichtung mindestens eine bewegliche Abdeckung (30) umfasst, die in eine in etwa parallele Richtung zu einer Längsachse der Gondel zwischen abwechselnd einer Schließposition, in der sie für die aerodynamische Kontinuität der Gondel sorgt, und einer Öffnungsposition verschiebbar montiert ist, in der sie einen Durchgang in der Gondel öffnet, der für eine umgeleitete Strömung (FD) bestimmt ist, die zur Vorderseite der Gondel geleitet wird, um eine Schubumkehr zu generieren; und
- mindestens einen Düsenabschnitt (5) zum Ausstoßen der Gase, in der Fortsetzung der beweglichen Abdeckung (30), und mindestens eine Düsenklappe (50) umfassend, die zwischen einer geschlossenen Position, in der die Düsenklappe (50) gegen den Düsenabschnitt (5) geklappt ist, um einen Leckage-Durchgang (51) nach außerhalb des Düsenabschnitts (5) zu schließen, und mindestens einer offenen Position beweglich montiert ist, in der die besagte Düsenklappe (50) außen am Düsenabschnitt (5) hervorsteht und den Leckage-Durchgang (51) nach außerhalb der Düse öffnet;
wobei die besagte Gondel **dadurch gekennzeichnet ist, dass** die besagte Düsenklappe (50) schwenkbar auf der beweglichen Abdeckung (30) montiert ist und das System zur Betätigung Mittel zur Betätigung (6) umfasst, die der beweglichen Abdeckung (30) und der Düsenklappe (50) gemeinsam sind, wobei die besagten Mittel zur Betätigung (6) ausgeformt sind, um die Verschiebungsbewegung der beweglichen Abdeckung (30) und den Schwenk der Düsenklappe (50) zwischen den folgenden drei Positionen zu aktivieren:
- einer ersten Position, die Ruheposition genannt wird, in der die bewegliche Abdeckung (30) in ihrer Schließposition ist und die Düsenklappe (50) in ihrer geschlossenen Position ist;
- einer zweiten, Öffnungsposition genannten Position der Düsenklappe (50), in der die bewegliche Abdeckung (30) in ihrer Schließposition ist und die Düsenklappe (50) in ihrer offenen Position ist; und
- einer dritten, Öffnungsposition genannten Position der beweglichen Abdeckung (30), in der die bewegliche Abdeckung (30) in ihrer Öffnungsposition ist und die Düsenklappe (50) in ihrer geschlossenen Position ist.

2. Gondel nach Anspruch 1, wobei die Mittel zur Betätigung (6) ausgeführt sind, um die Verschiebungsbewegung der beweglichen Abdeckung (30) von ihrer Öffnungsposition in ihre Schließposition zu aktivieren, und um danach den Schwenk der Düsenklappe (50) von ihrer geschlossenen Position in ihre offene Position zu aktivieren und dabei die bewegliche Abdeckung (30) in ihrer Schließposition zu halten.

3. Gondel nach den Ansprüchen 1 oder 2, wobei die Mittel zur Betätigung (6) ausgeführt sind, um den Schwenk der Düsenklappe (50) von ihrer offenen Position in ihre geschlossene Position zu aktivieren, und um danach die Verschiebungsbewegung der beweglichen Abdeckung (30) von ihrer Schließposition in ihre Öffnungsposition zu aktivieren und dabei die Düsenklappe (50) in ihrer geschlossenen Position zu halten.

4. Gondel nach einem der vorstehenden Ansprüche, wobei die Schubumkehrvorrichtung (3) eine vordere feststehende Struktur (4), wie eine vordere Rahmenstruktur, umfasst, die mindestens ein Strömungsumleitmittel (33) stützt, das im Inneren der beweglichen Abdeckung (30) in ihrer Öffnungsposition untergebracht ist, wobei die Mittel zur Betätigung (6) auf der besagten vorderen feststehenden Struktur (4) montiert sind.

5. Gondel nach Anspruch 4, weiter Mittel zum Verriegeln der beweglichen Abdeckung (30) in ihrer Schließposition auf der vorderen feststehenden Struktur (4) umfassend.

6. Gondel nach einem der vorstehenden Ansprüche, wobei die Düsenklappe (50) schwenkbar an einer inneren Wand (32) der beweglichen Abdeckung (30) montiert ist.

7. Gondel nach einem der vorstehenden Ansprüche, wobei die Düsenklappe (50) durch Schwenken nach außen der Düse von ihrer geschlossenen Position in ihre offene Position schwingt.

8. Gondel nach einem der vorstehenden Ansprüche, wobei die Mittel zur Betätigung (6) ein lineares Betätigungsglied (60) umfassen, das mit einem Hohlkörper (61) versehen ist, in dessen Inneren eine verschiebbare Stange (62) untergebracht ist, wobei die besagte verschiebbare Stange (62) die bewegliche Abdeckung (30) durchquert und ein freies Ende aufweist, das an der Düsenklappe (50) befestigt ist.

9. Gondel nach Anspruch 8, wobei die Stange (62) des linearen Betätigungsglieds (60) beweglich ist zwischen:
- der ersten, Ruheposition genannten, Position, in der die Stange (62) die bewegliche Abdeckung (30) in ihre Schließposition und die Düsenklappe (50) in ihre geschlossene Position steuert;
- der zweiten, Öffnungsposition genannten, Position der Düsenklappe (50), in der die Stange (62) im Verhältnis zur ersten Position in das Innere des Hohlkörpers (61) eingezogen ist, wobei die besagte Stange (62) die bewegliche Abdeckung (30) in ihrer Schließposition hält und den Schwenk der Düsenklappe (50) in ihre offene Position steuert, indem sie von der ersten auf die zweite Position übergeht;
und
- der dritten, Öffnungsposition genannten, Position der beweglichen Abdeckung (30), in der die Stange (62) im Verhältnis zur ersten Position aus dem Hohlkörper (61) ausgefahren ist, wobei die besagte Stange (62) die Verschiebungsbewegung der beweglichen Abdeckung (30) in ihre Öffnungsposition steuert und die Düsenklappe (50) in ihrer geschlossenen Position hält, indem sie von der ersten auf die dritte Position übergeht.

10. Gondel nach Anspruch 4, in Verbindung mit den Ansprüchen 8 oder 9, wobei der Hohlkörper (61) auf der vorderen feststehenden Struktur (4) befestigt ist.

## Claims

1. A turbojet engine nacelle comprising:
- a thrust reverser device (3) and an actuating system of said thrust reverser device (3), said device comprising at least one movable cowl (30) mounted in translation in a direction substantially parallel to a longitudinal axis of the nacelle between alternately a closing position in which it ensures the aerodynamic continuity of the nacelle and an opening position in which it opens a passage within the nacelle intended for a diverted flow (FD) directed towards the front of the nacelle in order to generate a thrust reversal; and
- at least one section of gas ejection nozzle (5) extending said movable cowl (30) and including at least one nozzle flap (50) movably mounted between a closed position in which the nozzle flap (50) is folded back against the nozzle section (5) in order to close a leakage passage (51) towards the outside of the nozzle section (5) and at least one open position in which said nozzle flap (50) protrudes outwardly from the nozzle section (5) and opens the leakage passage (51) towards the outside of the nozzle;
said nacelle being **characterized in that** said nozzle flap (50) is pivotally mounted on the movable cowl (30) and the actuating system comprises actuating means (6) common to the movable cowl (30) and to the nozzle flap (50), said actuating means (6) being shaped to activate the displacement in translation of the movable cowl (30) and the pivoting of the nozzle flap (50) between the three following positions:
- a first position called rest position in which the movable cowl (30) is in its closing position and the nozzle flap (50) is in its closed position;
- a second position called opening position of the nozzle flap (50) in which the movable cowl (30) is in its closing position and the nozzle flap (50) is in its open position; and
- a third position called opening position of the movable cowl (30) in which the movable cowl (30) is in its opening position and the nozzle flap (50) is in its closed position.

2. The nacelle according to claim 1, wherein the actuating means (6) are adapted to activate the displacement in translation of the movable cowl (30) from its opening position to its closing position, and then to activate the pivoting of the nozzle flap (50) from its closed position to its open position while holding the movable cowl (30) in its closing position.

3. The nacelle according to claim 1 or 2, wherein the actuating means (6) are adapted to activate the pivoting of the nozzle flap (50) from its open position to its closed position, and then to activate the displacement in translation of the movable cowl (30) from its closing position to its opening position while holding the nozzle flap (50) in its closed position.

4. The nacelle according to any one of the preceding claims, wherein the thrust reverser device (3) includes a front fixed structure (4), such as a front frame structure, supporting at least one flow diverting means (33) housed inside the movable cowl (30) in its opening position, the actuating means (6) being mounted on said front fixed structure (4).

5. The nacelle according to claim 4, further comprising means for locking the movable cowl (30) in its closing position on the front fixed structure (4).

6. The nacelle according to any one of the preceding claims, wherein the nozzle flap (50) is pivotally mounted on an inner wall (32) of the movable cowl (30).

7. The nacelle according to any one of the preceding claims, wherein the nozzle flap (50) swings from its closed position to its open position by pivoting towards the outside of the nozzle.

8. The nacelle according to any one of the preceding claims, wherein the actuating means (6) comprise a linear actuator (60) provided with a hollow body (61) inside which a rod (62) movable in translation is housed, said movable rod (62) passing through the movable cowl (30) and having a free end fastened on the nozzle flap (50).

9. The nacelle according to claim 8, wherein the rod (62) of the linear actuator (60) is movable between:
- the first position called rest position in which the rod (62) controls the movable cowl (30) in its closing position and the nozzle flap (50) in its closed position;
- the second position called opening position of the nozzle flap (50) in which the rod (62) is retracted inside the hollow body (61) relative to the first position, said rod (62) holding the movable cowl (30) in its closing position and controlling the pivoting of the nozzle flap (50) towards its open position by switching from the first to the second position; and
- the third position called opening position of the movable cowl (30) in which the rod (62) is deployed out of the hollow body (61) relative to the first position, said rod (62) controlling the displacement in translation of the movable cowl (30) towards its opening position and holding the nozzle flap (50) in its closed position by switching from the first to the third position.

10. The nacelle according to claim 4 in combination with claim 8 or 9, wherein the hollow body (61) is fastened on the front fixed structure (4).
